# EUROPÄISCHE PATENTANMELDUNG

(11) **EP 1 830 033 A2**
(43) Veröffentlichungstag der Anmeldung: **05.09.2007**
(21) Anmeldenummer: 07003627.2
(22) Anmeldetag: 22.02.2007
(51) Int. Cl.: E06B 9/78

(54) **Kupplung zum Verbinden zweier Enden des Gurtes einer Verdunklungsvorrichtung, insbesodere eines Rolladens o.dgl., sowie Vorrichtung zum Befestigen der Kupplung**

(30) Priorität: 04.03.2006 DE 102006010412
(71) Anmelder: Alfred Schellenberg GmbH, 57078 Siegen (DE)
(72) Erfinder: Schellenberg, Alfred, 57223 Kreuztal (DE)
(74) Vertreter: Pürckhauer, Rolf

(57) **Zusammenfassung**

Um auf relativ einfache Weise einen beschädigten oder gerissenen Gurt (5), insbesondere Rolladengurt zu reparieren oder ein handbetriebenen Gurtwickler gegen ein motorisch betriebenen Gurtwickler auszutauschen, ohne daß der Rolladenkasten zu diesem Zweck geöffnet werden muß, ist eine Kupplung mit zwei scharnierartig miteinander verbindbaren Kupplungsteilen (2) vorgesehen. Jedes Kupplungsteil (2) ist auf der einen Seite U-förmig umgebogen und hat auf der anderen Seite eine Reihe von in das jeweilige Endes des Gurtes (5) einzustechende spitze Ansätze (3). Die Kupplungsteile (2) umschließen bei komplettierter Kupplung einen gemeinsamen Scharnierstift (6). Die Erfindung betrifft auch eine Vorrichtung zum Befestigen der Kupplung.

## Beschreibung

Die Erfindung bezieht sich auf eine Kupplung zum Verbinden zweier Enden des Gurtes einer Verdunklungsvorrichtung, insbesondere eines Rolladens o.dgl., sowie auf eine Vorrichtung zum Befestigen derselben.

Wenn beispielsweise bei Beschädigungen an einem Gurt eines Rolladens derselbe ausgetauscht werden muß oder wenn ein handbetätigter Gurtwickler durch einen motorisch betriebenen Gurtwickler, der werkseitig bereits mit einem Gurt ausgerüstet ist, ausgetauscht werden soll, ist es meistens notwendig, den alten Gurt von der Gurtscheibe im Rolladenkasten abzunehmen. Dies ist ein immens großer Aufwand, da die Rolladenkästen zumeist übertapeziert sind und nach erfolgtem Austausch des Gurtes der Rolladenkasten erneut tapeziert werden muß, wobei dies nicht immer möglich ist, da oft Restbestände der alten Tapeten nicht aufbewahrt werden.

Der Erfindung liegt daher die Aufgabe zugrunde, eine Kupplung der angegebenen Gattung sowie eine Vorrichtung zum Befestigen derselben zu schaffen, die auf relativ einfache Weise eine Reparatur eines beschädigten oder gerissenen Gurtes, insbesondere eines Rolladengurtes bzw. den Austausch eines handbetriebenen Gurtwicklers gegen ein motorisch angetriebenen Gurtwickler ermöglicht, ohne daß der Rolladenkasten zu diesem Zweck geöffnet werden muß.

Diese Aufgabe wird erfindungsgemäß gelöst durch zwei scharnierartig miteinander verbindbare Kupplungsteile, von denen jedes auf der einen Seite U-förmig umgebogen ist und auf der anderen Seite eine Reihe von in das jeweilige Ende des Gurtes einzustehende spitze Ansätze aufweist, wobei die Kupplungsteile einen gemeinsamen Lagerstift umschließen.

Dabei ist es zweckmäßig, wenn die spitzen Ansätze der einen Seite jedes Kupplungsteils den Lücken zwischen den spitzen Ansätzen der anderen Seite des jeweilig gleichen Kupplungsteils gegenüberliegen.

Die Vorrichtung zum Befestigen der Kupplungsteile der Kupplung am jeweiligen Ende des Gurtes weist eine Grundplatte und eine auf diese aufschiebbare Deckplatte auf, wobei die Grundplatte und die Deckplatte einen Einschubkanal für das Gurtende bilden, und es ist ein Haltestift für das anfänglich noch V-förmig gespreizte Kupplungsteil vorgesehen. Der Haltestift weist zweckmäßig am einen Ende einen Griffwulst, z.B. in Form einer Kugel auf.

Ein leistenförmiges Widerlager ist vorgesehen, so daß das Kupplungsteil zwischen diesem und dem Haltestift mit der gebogenen Seite gehalten wird.

Die Deckplatte der Vorrichtung sollte im Bereich des zwischen Haltestift und Widerlager gehaltenen Kupplungsteils eine große Aussparung aufweisen, damit das Kupplungsteil zum Befestigen am Gurt zugänglich ist, wie nachfolgend im Einzelnen beschrieben.

Die Erfindung wird nunmehr mit Bezugnahme auf die Zeichnungen ausführlicher beschrieben. Dabei zeigt
- Fign. 1a und 1b: ausgestanzte Zuschnitte zur Herstellung der Kupplungsteile stark vergrößert,
- Fign. 2a und 2b: Draufsichten der bereits V-förmig gebogenen Kupplungsteile,
- Fig. 3: einen Schnitt nach der Linie III-III in Fig. 2b,
- Fign. 4(a) bis (f): die verschiedenen Phasen des Befestigens eines Kupplungsteils an einem Gurtende,
- Fig. 5: zwei miteinander verbundene Kupplungsteile,
- Fig. 6: in Draufsicht die Vorrichtung zum Befestigen eines Kupplungsteils an einem Gurtende,
- Fig. 7: einen Schnitt nach der Linie VII-VII in Fig. 6
- Fig. 8: einen Schnitt nach der Linie VIII-VIII in Fig. 6,
- Fig. 9: eine Ansicht von unten auf Fig. 8 und
- Fig. 10: eine Draufsicht auf eine fertiggestellte Gurtverbindung.

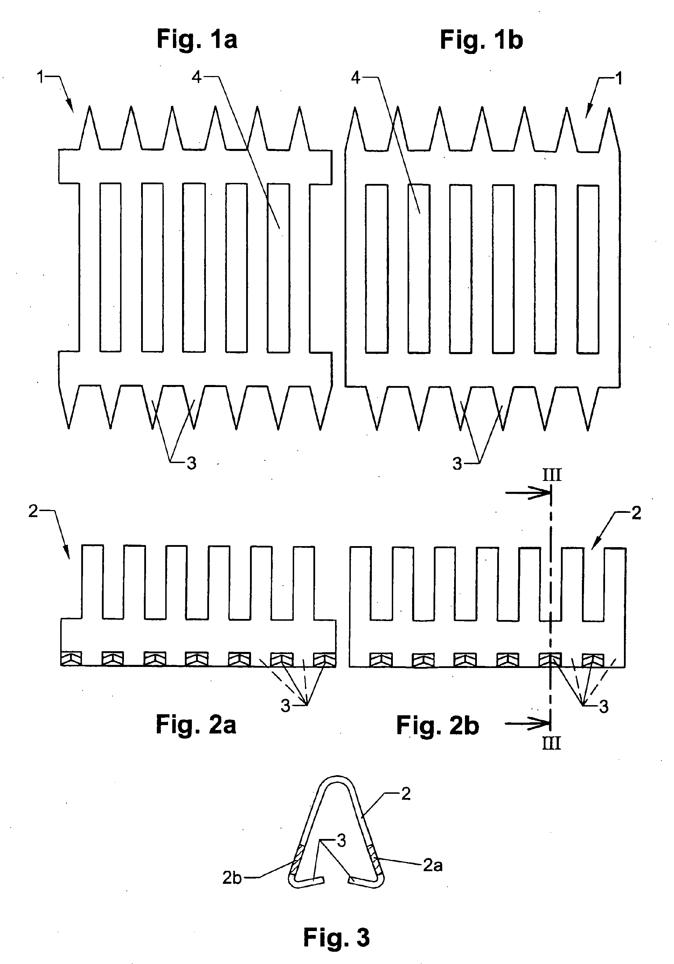

Die in den Fign. 1a und 1b dargestellten ebenen Zuschnitte 1 der Kupplungsteile 2 zeigen spitze Ansätze 3 und Ausnehmungen 4. Die Fign. 2a und 2b zeigen die bereits V-förmig gebogenen Zuschnitte 1, die auch in Fig. 3 im Schnitt nach der Linie III-III in Fig. 2b dargestellt ist. Dabei sind die spitzen Ansätze 3 bereits spitzwinklig nach innen gebogen.

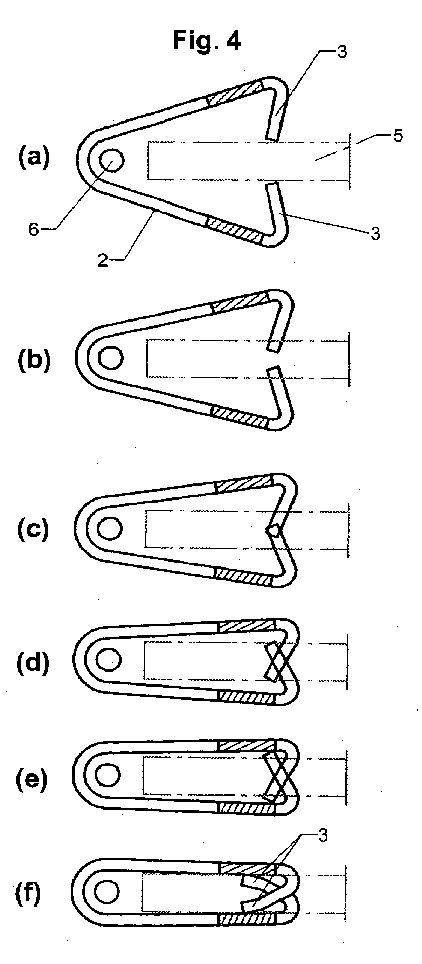

Fig. 4 zeigt in den Darstellungen (a) bis (f) die verschiedenen Phasen des Befestigens des Kupplungsteils 2 an einem strichpunktiert dargestellten Gurt 5, wobei die spitzen Ansätze 3 den Gurt 5 durchdringen und so weit gebogen werden, daß die Schenkel des Kupplungsteils 2 parallel zueinander verlaufen und dicht am Gurt 5 anliegen. Wie aus den Figuren erkennbar, stützen sich die Seiten 2a, 2b der Kupplungsteile 2 jeweils an den gegenüberliegenden Seiten 2a, 2b ab. Dabei ist es zweckmäßig, wenn die spitzen Ansätze 3 der einen Seite 2a des Kupplungsteils 2 den Lücken zwischen den spitzen Ansätzen 3 der anderen Seite 2b des gleichen Kupplungsteils 2 gegenüberliegen.

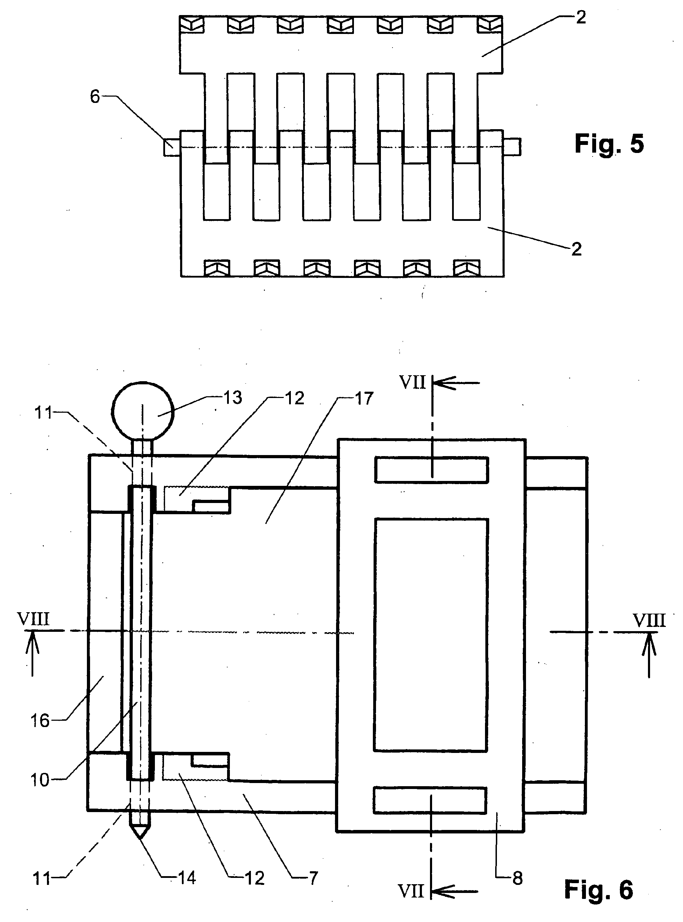

In Fig. 5 sind zwei Kupplungsteile 2 bereits über einen Scharnierstift 6 miteinander verbunden. Die verbundenen Enden des Gurtes 4 sind in Fig. 5 nicht dargestellt.

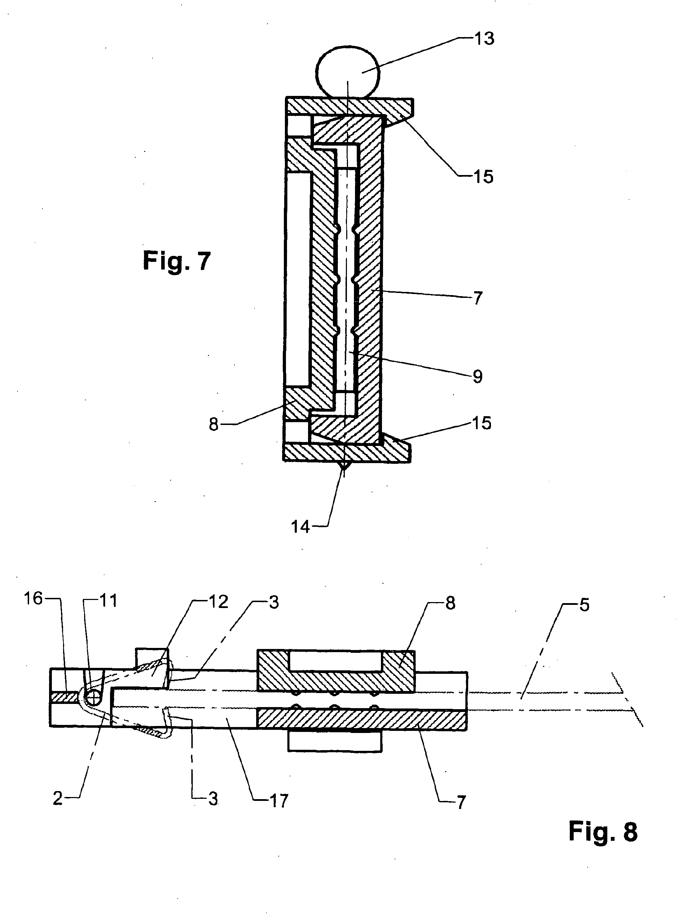

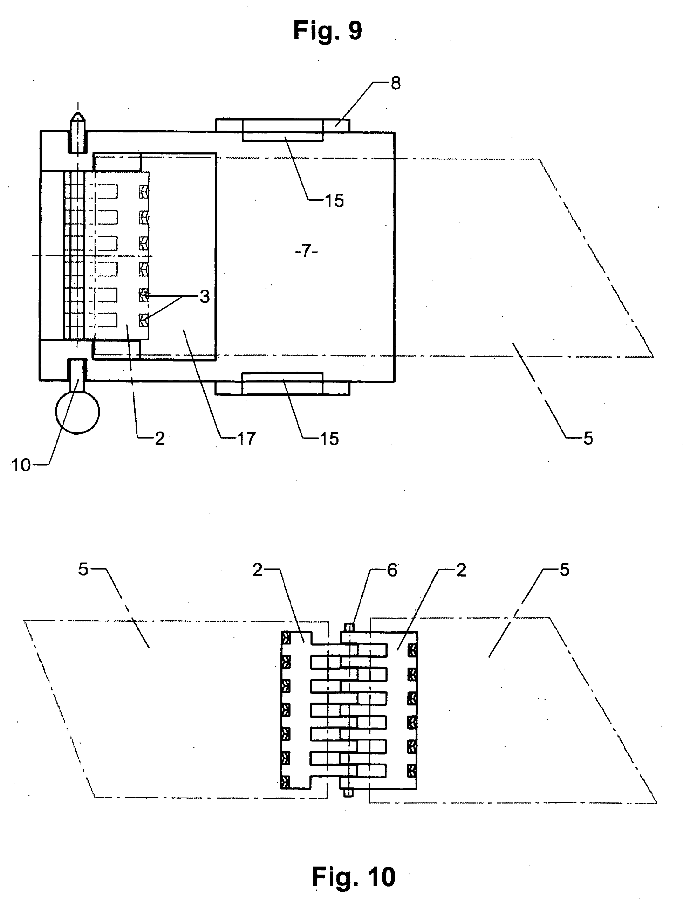

Ein Ausführungsbeispiel einer Vorrichtung zum Befestigen der Kupplungsteile 2 der Kupplung 1 am jeweiligen Ende des Gurtes 5 zeigen die Figuren 6 bis 9. Diese Vorrichtung weist eine Grundplatte 7 und eine auf diese aufschiebbare Deckplatte 8 auf. Die Grundplatte 7 und die Deckplatte 8 bilden einen Einschubkanal 9 für den mit dem Kupplungsteil 2 zu verbindenden Gurt 5. Ein Haltestift 10 für das noch V-förmig gespreizte Kupplungsteil 2 (siehe Fig. 9) ist in Bohrungen 11 in von der Grundplatte 7 hochstehenden Blöcken 12 eingesteckt und weist zur besseren Handhabung am einen Ende einen Griffwulst 13 auf, der, wie dargestellt, kugelförmig sein kann. Am anderen Ende ist der Haltestift 10 mit einer Spitze 14 versehen. Die auf der Grundplatte 7 aufschiebbare Deckplatte 8 ist mit hakenförmigen Rändern 15 an der Grundplatte 7 geführt, wie deutlich die Schnittdarstellung in Fig. 7 zeigt. Für das in die Vorrichtung eingelegte Kupplungsteil 2 weist die Grundplatte 7 ein leistenförmiges Widerlager 16 auf, so daß das Kupplungsteil 2 in seiner Lage um das Ende des eingeschobenen Gurtes 5 gehalten wird, wie die Fign. 8 und 9 zeigen. Die Grundplatte 7 hat ferner im Bereich des eingelegten Kupplungsteils 2 eine Aussparung 17, damit das Kupplungsteil 2 für eine Zange zugänglich ist.

Die Arbeitsweise mit der vorbeschriebenen Vorrichtung zum Verbinden des Endes eines Gurtes 5 ist wie folgt:
- Der Gurt 5, der z.B. ein verschlissenes Teilstück aufweist oder gerissen ist, wird bei geöffnetem Rolladen mit einem Nagelstift oder einem ähnlichen durch den Gurt 5 hindurchzusteckenden Stift am Rolladenkasten gesichert;
- bei schadhaftem Gurt 5 wird der Gurt 5 getrennt;
- das obere verbleibende Gurtende wird über den Einschubkanal 9 in die Befestigungsvorrichtung eingeführt und fixiert;
- das sich bereits in der Befestigungsvorrichtung befindliche Kupplungsteil 2, in den das Gurtende hineinragt, wird mit einer Zange zusammengedrückt, so daß sich die spitzen Ansätze 3 desselben im Gurt 5 festkrallen;
- dann wird die Befestigungsvorrichtung nach Entfernen des Haltestiftes 10 und der Deckplatte 8 vom Gurt 5 abgenommen.

Das andere Kupplungsteil 2 wird dann auf die gleiche Weise mit dem anderen Gurtende beispielsweise eines neuen Gurtwicklers verbunden, und beide Kupplungsteile 2 werden mittels des gemeinsamen Scharnierstiftes 6 miteinander verbunden. Der Scharnierstift 6 wird durch eine Umwicklung der Kupplungsteile gegen Herausfallen gesichert.

### Bezugszeichenliste

- 1: ebener Zuschnitt für 2
- 2: Kupplungsteil(e).
- 2a: eine Seite von 2
- 2b: andere Seite von 2
- 3: spitze Ansätze an 1 bzw. 2
- 4: Ausnehmungen von 1
- 5: Gurt
- 6: Scharnierstift für 2
- 7: Grundplatte
- 8: Deckplatte
- 9: Einschubkanal für 5
- 10: Haltestift für 2
- 11: Bohrungen in 12
- 12: hochstehende Blöcke von 7
- 13: Griffwulst an 10
- 14: Spitze an 10
- 15: hakenförmige Ränder an 7
- 16: leistenförmiges Widerlager für 2
- 17: Aussparung in 7

## Patentansprüche

1. Kupplung zum Verbinden zweier Enden des Gurtes einer Verdunklungsvorrichtung, insbesondere eines Rolladens o. dgl., **gekennzeichnet durch** zwei scharnierartig miteinander verbindbare Kupplungsteile (2), von denen jedes auf der einen Seite U-förmig umgebogen ist und auf der anderen Seite eine Reihe von in das jeweilige Ende des Gurtes (5) einzustechende spitze Ansätze (3) aufweist, wobei die Kupplungsteile (2) einen gemeinsamen Scharnierstift (6) umschließen.

2. Kupplung nach Anspruch 1, **dadurch gekennzeichnet, daß** die spitzen Ansätze (3) der einen Seite (2a) jedes Kupplungsteils (2) den Lücken zwischen den spitzen Ansätzen (3) der anderen Seite (2b) des jeweilig gleichen Kupplungsteils (2) gegenüberliegen.

3. Vorrichtung zum Befestigen der Kupplungsteile der Kupplung nach den Ansprüchen 1 und 2 am jeweiligen Ende des Gurtes, **gekennzeichnet durch** eine Grundplatte (7) und eine auf diese aufschiebbare Deckplatte (8), wobei die Grundplatte (7) und die Deckplatte (8) einen Einschubkanal (9) für das Ende des Gurtes (5) bilden, sowie **durch** einen Haltestift (19) für das anfänglich noch V-förmig gespreizte Kupplungsteil (2).

4. Vorrichtung nach Anspruch 3, **dadurch gekennzeichnet, daß** der Haltestift (10) am einen Ende einen Griffwulst (13) aufweist.

5. Vorrichtung nach Anspruch 3, **gekennzeichnet durch** ein leistenförmiges Widerlager (16) für das Kupplungsteil (2).

6. Vorrichtung nach Anspruch 3, **dadurch gekennzeichnet, daß** die Deckplatte (8) mit hakenförmigen Rändern (15) an der Grundplatte (7) geführt ist.

7. Vorrichtung nach einem der Ansprüche 3 bis 6, **dadurch gekennzeichnet, daß** die Grundplatte (7) im Bereich des zwischen Haltestift (10) und Widerlager (16) gehaltenen Kupplungsteils (2) eine Aussparung (17) aufweist.
